# FASCICULE DE BREVET EUROPEEN

(11) **EP 4 453 450 B1**
(45) Date de publication et mention de la délivrance du brevet: **03.09.2025**
(21) Numéro de dépôt: 22847608.1
(22) Date de dépôt: 22.12.2022
(51) Int. Cl.: F16H 61/465, F16H 61/4043, F16H 61/4139, F16H 61/4035, F16H 61/4069, F16H 61/42, F16H 61/44, F16H 61/47, F16H 61/472

(54) **PROCEDE DE MISE EN SERVICE POUR UNE TRANSMISSION ELECTROHYDRAULIQUE**
VERBESSERTES STARTVERFAHREN FÜR EIN ELEKTROHYDRAULISCHES GETRIEBE
IMPROVED START-UP METHOD FOR AN ELECTRO-HYDRAULIC TRANSMISSION

(30) Priorité: 22.12.2021 FR 2114253
(43) Date de publication de la demande: 30.10.2024
(73) Titulaire: Poclain Hydraulics Industrie, 60410 Verberie (FR)
(72) Inventeur: TAXIL, Loris, 60410 VERBERIE (FR)
(74) Mandataire: Cabinet Beau de Loménie
(86) Numéro de dépôt international: PCT/FR2022/052471
(87) Numéro de publication internationale: WO 2023/118754

(56) Documents cités:
- FR-A- 1 575 997
- FR-A1- 2 958 886
- FR-A1- 3 026 811

## Description

### Domaine Technique

La présente invention concerne un procédé de mise en service et un procédé de désengagement amélioré pour une transmission électrohydraulique, et en particulier pour un dispositif d'assistance temporaire.

### Technique antérieure

On connait différentes solutions proposant d'intégrer un dispositif d'entrainement électrohydraulique pour des véhicules ou engins ayant un moteur primaire thermique ou un moteur primaire électrique. Le document FR3026811 présente un exemple de système d'entrainement pour un organe de déplacement de véhicule, notamment un système d'entraînement pour un organe de déplacement de véhicule, ledit système d'entraînement comprenant une pompe hydraulique à cylindrée variable présentant un refoulement et une admission, un moteur hydraulique présentant un refoulement et une admission, adapté pour entraîner en rotation ledit organe de déplacement et pouvant être sélectivement engagé ou désengagé dudit organe de déplacement, le moteur hydraulique étant alimenté par la pompe hydraulique via un circuit hydraulique en boucle fermée comprenant une pompe de gavage adaptée pour réaliser un gavage du circuit hydraulique, le circuit hydraulique comprenant une valve d'engagement adaptée pour sélectivement relier le moteur hydraulique à la pompe hydraulique ou isoler le moteur hydraulique par rapport à la pompe hydraulique et relier le refoulement de la pompe hydraulique à son admission, et relier le refoulement du moteur hydraulique à son admission, un moteur électrique, adapté pour entraîner la pompe hydraulique et une source de puissance électrique, adaptée pour alimenter le moteur électrique.

Différentes architectures de transmissions ont ainsi été proposées pour réaliser l'entrainement d'un véhicule, notamment d'un véhicule associant des éléments d'entrainement hydrauliques avec des éléments thermiques ou électriques, et en particulier pour le cas d'une assistance temporaire à l'aide d'une assistance hydraulique, par exemple électrohydraulique.

Cependant, les différentes architectures proposées posent des problématiques en termes d'optimisation et de mise en œuvre, du fait des caractéristiques des différents éléments qui impliquent des contraintes spécifiques, et il en résulte que les architectures et les procédés communément employés peuvent ne pas être adaptés.

La présente invention vise ainsi à répondre au moins partiellement à ces problématiques.

### Exposé de l'invention

La présente invention concerne ainsi un procédé de mise en service d'un système d'entrainement secondaire pour un organe de déplacement de véhicule, le véhicule comprenant un système d'entrainement primaire, ledit système d'entrainement secondaire comprenant
- une pompe hydraulique à cylindrée variable présentant un refoulement et une admission,
- un moteur hydraulique présentant un refoulement et une admission, adapté pour entrainer en rotation ledit organe de déplacement et pouvant être sélectivement engagé ou désengagé dudit organe de déplacement, le moteur hydraulique étant alimenté par la pompe hydraulique via un circuit hydraulique en boucle fermée comprenant une pompe de gavage adaptée pour réaliser un gavage du circuit hydraulique, le circuit hydraulique comprenant une valve d'engagement adaptée pour sélectivement relier ou isoler le moteur hydraulique par rapport à la pompe hydraulique ou isoler le moteur hydraulique par rapport à la pompe hydraulique (30) et relier le refoulement de la pompe hydraulique à son admission, et relier le refoulement du moteur hydraulique à son admission,,
- un moteur électrique, adapté pour entrainer la pompe hydraulique,
- une source de puissance électrique, adaptée pour alimenter le moteur électrique,
ledit procédé de mise en service comprenant les étapes suivantes, en considérant une configuration à l'arrêt du système d'entrainement, dans laquelle le moteur électrique, la pompe hydraulique et la pompe de gavage sont à l'arrêt, le moteur hydraulique est désengagé, et la valve d'engagement isole le moteur hydraulique par rapport à la pompe hydraulique, relie le refoulement de la pompe hydraulique à son admission, et relie le refoulement du moteur hydraulique à son admission:
- mise en service de la pompe de gavage,
- mise en route du moteur électrique de manière à entrainer en rotation la pompe hydraulique,
- ajustement de la cylindrée de la pompe hydraulique et/ou de la vitesse de rotation du moteur électrique pour fournir un débit correspondant à une consigne appliquée au moteur hydraulique,
- pilotage de la valve d'engagement pour réaliser la mise en service du moteur hydraulique.

Selon un exemple, la valve d'engagement présente trois orifices reliés au moteur hydraulique, et est adaptée pour relier l'admission et le refoulement du moteur hydraulique à un carter du moteur hydraulique et à un circuit de gavage du circuit hydraulique, le moteur hydraulique étant du type a désengagement par la rétractation de pistons dans un bloc cylindre.

Selon un exemple, le moteur hydraulique est muni de ressorts de rappels tendant à positionner les pistons dans une position rétractée dans le bloc cylindres.

Selon un exemple, la consigne appliquée lors de l'ajustement de la cylindrée correspond à une vitesse d'avancement du véhicule de sorte que le moteur hydraulique ne fournisse pas de couple.

Selon un exemple, suite au pilotage de la valve d'engagement, on applique une consigne au système de sorte que le moteur hydraulique fournisse un couple de traction non nul.

Selon un exemple, la pompe de gavage est entrainée en rotation par le moteur électrique, et dans lequel la mise en route du moteur électrique est réalisée de manière à mettre en service de la pompe de gavage.

Selon un exemple, la pompe de gavage est un groupe électro-pompe indépendant du moteur électrique.

Selon un exemple, la cylindrée de la pompe hydraulique et la vitesse de rotation du moteur électrique sont pilotées de manière à réaliser une consigne tout en conservant une vitesse de rotation du moteur électrique supérieure à une valeur seuil inférieure.

Selon un exemple, on pilote la cylindrée de la pompe hydraulique et la vitesse de rotation du moteur électrique de manière à réaliser la consigne en maximisant le rendement total de la pompe hydraulique et du moteur électrique tout en conservant une vitesse de rotation du moteur électrique supérieure à la valeur seuil inférieure.

Selon un exemple, le procédé comprend les étapes suivantes pour le désengagement du système d'entrainement, en considérant une configuration engagée du système d'entrainement, dans laquelle le moteur électrique est en rotation, la pompe hydraulique et la pompe de gavage délivrent un débit, et le moteur hydraulique est engagé et entraine en rotation l'organe de déplacement:
- pilotage de la cylindrée de la pompe hydraulique et/ou de la vitesse de rotation du moteur électrique de manière à abaisser la pression dans le circuit hydraulique pour atteindre une pression de repos,
- pilotage de la valve d'engagement de manière à isoler le moteur hydraulique de la pompe hydraulique,
- mise à cylindrée nulle de la pompe hydraulique et arrêt du moteur électrique,
- arrêt de la pompe de gavage.

Selon un exemple, la cylindrée de la pompe hydraulique et la vitesse de rotation du moteur électrique sont pilotées de manière conserver une vitesse de rotation du moteur électrique supérieure à une valeur seuil inférieure jusqu'à l'étape d'arrêt du moteur électrique.

Selon un exemple, la pression de repos est déterminée de sorte que le moteur hydraulique (40) applique un couple nul.

L'invention s'applique à toute machine ou engin ayant une chaine de traction ou un entrainement électrique, en particulier les machines agricoles, par exemple les tracteurs et pulvérisateurs automoteurs, et les machines de chantier, par exemples compacteurs, élévateurs, nacelles, pelles mécaniques, bouldozeurs, véhicules, en particulier les poids lourds, camions et les remorques assistées.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 représente schématiquement un véhicule ou engin muni d'un système électro-hydraulique d'entrainement d'essieu.
[Fig. 2] La figure 2 est un graphique qui illustre schématiquement le pilotage selon un aspect de l'invention.
[Fig. 3] La figure 3 schématise les étapes d'un procédé de pilotage selon un aspect de l'invention.
[Fig. 4] La figure 4 présente un exemple de système selon un aspect de l'invention.

Sur l'ensemble des figures, les éléments en commun sont repérés par des références numériques identiques.

### Description des modes de réalisation

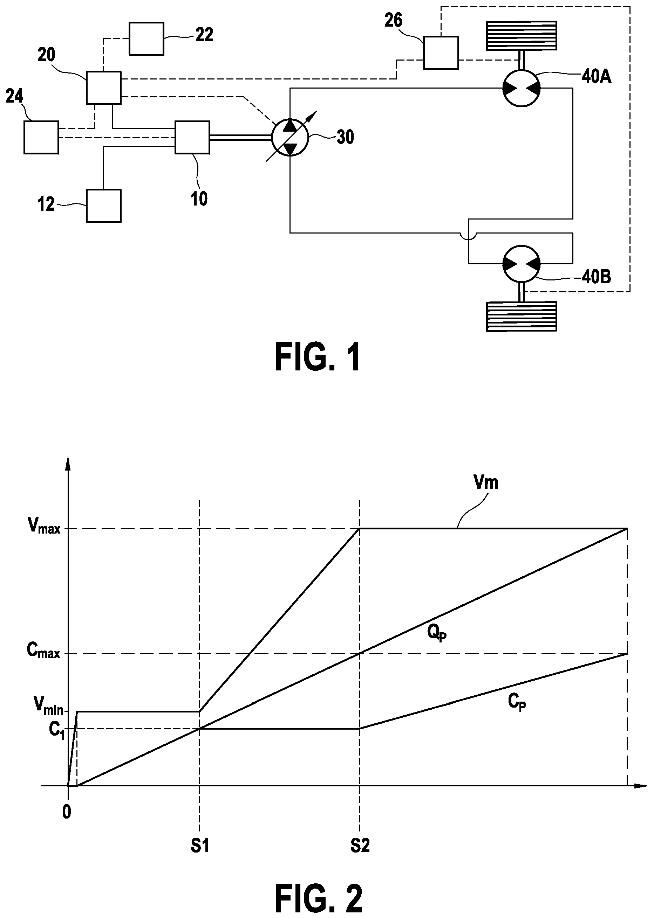

La figure 1 représente schématiquement un véhicule ou engin muni d'un système électro-hydraulique d'entrainement d'essieu.

On représente sur cette figure un moteur électrique 10 alimenté par une batterie 12 et piloté par un contrôleur 20. Le moteur électrique 10 est par exemple du type synchrone à aimants permanents. Le moteur électrique 10 peut par exemple comprendre une carte de pilotage interne et un hacheur ou variateur non détaillés sur la figure. A partir d'une consigne reçue de l'extérieur, le courant est découpé par le hacheur en intensité et en fréquence pour entrainer le moteur électrique 10 au couple et à la vitesse demandés. Le moteur électrique 10 est couplé à une pompe hydraulique 30. La pompe hydraulique 30 est reliée à un circuit hydraulique que l'on représente de manière simplifiée, via lequel elle entraine un ou plusieurs moteurs hydrauliques adaptés pour entrainer en rotation un organe de déplacement de véhicule. Par organe de déplacement, on désigne par exemple un essieu ou une roue. Dans l'exemple illustré, la pompe hydraulique 30 alimente deux moteurs hydrauliques 40A et 40B montés en série, chacun des moteurs hydrauliques 40A et 40B entrainant en rotation une roue d'un véhicule. On comprend que ce mode de réalisation n'est pas limitatif, et que tout type de circuit hydraulique peut être associé à la pompe hydraulique 30, comprenant un ou plusieurs moteurs hydrauliques 40, entrainant en rotation un organe de déplacement de véhicule, notamment un essieu ou une roue.

La pompe hydraulique 30 est une pompe hydraulique à cylindrée variable, typiquement une pompe hydraulique à pistons axiaux et à plateau incliné, le pilotage de l'inclinaison du plateau réalisant ainsi un pilotage de la cylindrée de la pompe.

Le ou les moteurs hydrauliques alimentés par la pompe hydraulique 30 sont typiquement des moteurs hydrauliques à cylindrée fixe, par exemple des moteurs hydrauliques à pistons radiaux et came multilobes.

Le système tel que proposé peut par exemple être employé pour réaliser la transmission principale d'un véhicule, ou également définir une assistance hydraulique sur un essieu secondaire, par opposition à un essieu primaire entrainé par un moteur primaire du véhicule. Dans le cas de la réalisation d'une assistance hydraulique, le système peut alors être engagé en permanence, ponctuellement, ou dans des conditions prédéterminées, par exemple lorsque la vitesse du véhicule est inférieure ou égale à une vitesse prédéterminée. Le fonctionnement décrit par la suite demeure inchangé quelle que soit l'application retenue.

L'actionnement du système d'entrainement tel que schématisé pose des problématiques de pilotage du moteur électrique 10.

Le contrôleur 20 tel que proposé est configuré de manière à réaliser un pilotage du moteur électrique 20 et de la pompe hydraulique 30 pour obtenir un fonctionnement assurant la sécurité des composants tout en optimisant le rendement.

Le contrôleur 20 est typiquement relié à des organes de pilotage, et est donc adapté pour recevoir une consigne, qui résulte typiquement d'une action de l'utilisateur, et qui va ainsi par exemple commander la mise en service de l'assistance hydraulique.

La consigne est typiquement une consigne de débit qui définit une valeur cible de débit devant être délivré par la pompe hydraulique 30, ou une consigne de vitesse de rotation définissant une valeur cible de rotation pour l'organe de déplacement entrainé par le système, par exemple une consigne de vitesse de la machine, ou une consigne de rotation de roues ou d'un essieu, ou une vitesse de rotation d'un moteur entrainant un organe de déplacement tel qu'une roue. On comprend que de telles consignes sont équivalentes.

Le contrôleur 20 tel que proposé pilote la cylindrée de la pompe hydraulique 30 et la vitesse de rotation du moteur électrique 10 de manière réaliser la consigne et à assurer une vitesse de rotation minimale du moteur électrique 10.

En effet, un moteur électrique tend à monter en température lorsqu'il fonctionne à une vitesse de rotation faible et fournit un couple élevé, ce qui entraine des risques de dégradation. Le rendement du moteur électrique 10 se trouve aussi dégradé si on lui demande de fournir trop de couple pour une vitesse donnée.

Le contrôleur 20 tel que proposé vise ainsi à assurer un fonctionnement du moteur électrique 10 à une vitesse de rotation supérieure ou égale à une valeur seuil inférieure de vitesse, ce qui permet ainsi de prévenir les risques de surchauffe et donc de dégradation du moteur électrique 10.

La valeur seuil inférieure de vitesse est déterminée par le calculateur en fonction de données typiquement stockées dans une unité de mémoire 22.

La valeur seuil inférieure de vitesse peut être une valeur fixe, par exemple comprise entre 800 et 1500 tours par minute, ou entre 900 et 1200 tours par minute, ou par exemple égale à 1000 tours par minute, ou peut être une valeur variable en fonction de la température.

Le système peut ainsi comprendre un capteur de température 24, adapté pour mesurer une température caractéristique du fonctionnement du moteur électrique 10. Le capteur de température 24 peut ainsi par exemple être positionné à proximité du moteur électrique 10 ou contre le moteur électrique 10 pour en mesurer la température, ou peut mesurer la température ambiante.

Le contrôleur 20 peut ensuite déterminer la valeur seuil inférieure de vitesse en fonction de la température ainsi mesurée. La valeur seuil inférieure Vmin est ainsi typiquement variable en fonction de la température mesurée. En variante, le contrôleur 20 peut recevoir, déterminer ou estimer la température par tout autre moyen adapté. La valeur seuil inférieure Vmin est ainsi typiquement déterminée de manière à assurer la stabilité thermique du système, et notamment du moteur électrique 10, de sorte que le moteur électrique 10 tourne à une vitesse suffisamment élevée pour assurer l'évacuation de la chaleur, et ainsi éviter une surchauffe du moteur électrique 10.

Ainsi, le contrôleur 20 est configuré de manière à prioriser la vitesse de rotation du moteur électrique 10 de manière à ce qu'elle soit supérieure ou égale à la valeur seuil inférieure de vitesse, ce qui permet de protéger le moteur électrique 10 contre d'éventuelles surchauffes. Le contrôleur 20 adapte alors la cylindrée de la pompe hydraulique 30 afin de réaliser la consigne.

Le contrôleur 20 est typiquement configuré de manière à ensuite, dans un deuxième temps, maximiser le rendement de la pompe hydraulique.

Le contrôleur 20 est ainsi typiquement configuré de manière à piloter la cylindrée de la pompe hydraulique et la vitesse de rotation du moteur électrique de manière à réaliser la consigne en maximisant le rendement total de la pompe hydraulique et du moteur électrique tout en conservant une vitesse de rotation du moteur électrique supérieure à une valeur seuil inférieure.

L'unité de mémoire 22 est ainsi typiquement chargée préalablement avec des données de caractéristiques de fonctionnement de la pompe hydraulique 30 et du moteur électrique 10, typiquement des caractéristiques de rendement ou des caractéristiques indiquant des correspondances entre une valeur d'entrée ou de consigne et des paramètres de sortie de l'élément considéré, par exemple sous la forme d'abaques ou de tables, et va déterminer la cylindrée de la pompe hydraulique et la vitesse de rotation du moteur électrique 10 de manière à maximiser le rendement total en fonction de la consigne et de la vitesse de rotation du moteur électrique 10, qui est supérieure ou égale à la valeur seuil inférieure. Les données sont ainsi par exemple une cartographie de perte/rendement ou de régime/couple de la pompe hydraulique 30 et du moteur électrique 10, ou de la cylindrée de la pompe hydraulique en fonction du besoin en débit et de la pression délivrée, et définissent ainsi une pluralité de points de fonctionnement pour le couple formé par la pompe hydraulique 30 et le moteur électrique 10.

Pour obtenir le point de fonctionnement optimisé, on détermine en fonction des données ainsi chargées le couple et la puissance en fonction de la vitesse de rotation, de manière à positionner le point de régime du moteur hydraulique 10 au point fournissant la puissance disponible maximale.

Le contrôleur 20 est typiquement configuré de manière à présenter un fonctionnement variable selon la vitesse d'entrainement de l'essieu ou de l'organe entrainé par le système de traction électro-hydraulique, c'est-à-dire un fonctionnement non linéaire.

Le contrôleur peut ainsi être configuré de manière à définir plusieurs valeurs seuil correspondant à plusieurs étapes de fonctionnement du système.

Les valeurs seuils peuvent par exemple correspondre à une vitesse de rotation de l'organe entrainé en rotation par le système hydraulique, par exemple une vitesse de rotation d'un essieu.

Dans l'exemple illustré, on représente ainsi un capteur de vitesse 26, adapté pour mesurer et fournir une information relative à la vitesse de rotation des roues entrainées par les moteurs hydrauliques 40A et 40B. On comprend que cet exemple n'est pas limitatif, et que d'autres capteurs ou composants peuvent être employés afin de définir les valeurs seuils.

Les valeurs seuils correspondent typiquement à un démarrage progressif, pour lequel on peut ainsi définir différents modes de fonctionnement.

A titre d'exemple, on peut définir un premier mode de fonctionnement pour des valeurs comprises entre 0 tours par minute et S1 tours par minute, où S1 est une première valeur seuil.

Ce premier mode de fonctionnement traduit ainsi le démarrage du véhicule et sa mise en mouvement.

Pour un tel mode, on comprend que le besoin en couple est important, et également que la vitesse à obtenir, donc le débit à fournir est très faible. Or, pour le moteur électrique 10, fournir un couple important avec une vitesse de rotation réduite entrainerait des risques importants de surchauffe. Ainsi, pour ce premier mode de fonctionnement, le contrôleur 20 va réaliser le pilotage de manière à assurer en priorité que la vitesse de rotation du moteur électrique 10 est supérieure ou égale à la valeur seuil inférieure, ou typiquement en conservant une vitesse de rotation du moteur électrique 10 constante et égale à la valeur seuil inférieure. La cylindrée de la pompe hydraulique 30 est ensuite déterminée de manière à réaliser la consigne.

Une fois le premier seuil S1 atteint, le contrôleur 20 peut alors présenter un deuxième mode de fonctionnement, dans lequel il réalise typiquement un pilotage en conservant la cylindrée de la pompe hydraulique 30 égale à une valeur constante, et il augmente la vitesse de rotation du moteur électrique 10 pour réaliser la consigne.

Ce deuxième mode de fonctionnement peut par exemple être réalisé jusqu'à ce que le moteur électrique 10 atteigne sa vitesse de rotation maximale, pour un second seuil S2.

Une fois le second seuil S2 atteint, la vitesse de rotation du moteur électrique 10 est maintenue constante et égale à sa valeur maximale, et le contrôleur 20 pilote alors la cylindrée de la pompe hydraulique 30 de manière à réaliser la consigne.

La figure 2 est un graphe qui représente schématiquement ces différents modes de fonctionnement.

L'axe des abscisses est ici l'évolution d'une valeur de consigne, qui peut par exemple correspondre à la vitesse de rotation d'un essieu.

L'axe des ordonnées représente l'évolution de la vitesse de rotation du moteur électrique 10, le débit de la pompe hydraulique 30 et la cylindrée de la pompe hydraulique 30.

Les différentes courbes schématisent ainsi l'évolution de ces différents paramètres en fonction de la consigne :
- Vm représente la vitesse de rotation du moteur électrique 10,
- Cp représente la cylindrée de la pompe hydraulique 30, et
- Qp représente le débit délivré par la pompe hydraulique 30.

Comme on le voit sur cette figure lors de la mise en fonctionnement du système, c'est-à-dire lorsque la consigne devient supérieure à 0, la vitesse de rotation Vm du moteur électrique 10 augmente rapidement jusqu'à attendre la valeur seuil inférieure Vmin. La vitesse de rotation Vm du moteur électrique 10 reste ensuite constante et égale à Vmin jusqu'au seuil S1. Dans ce premier intervalle, c'est la cylindrée de la pompe hydraulique 30 qui est modifiée de manière à obtenir le débit Qp souhaité. Dans l'exemple illustré, la valeur seuil inférieure Vmin est représentée comme étant constante. Or, comme indiqué précédemment, la valeur seuil inférieure peut évoluer en fonction de la température. On comprend donc ici que cet exemple n'est pas limitatif. Selon un exemple, tant que la vitesse de rotation Vm du moteur électrique 10 est inférieure à Vmin, la cylindrée Cp de la pompe hydraulique 30 reste nulle.

Lorsque la consigne est comprise entre S1 et S2, la cylindrée Cp de la pompe hydraulique 30 est maintenue constante, égale à une valeur C1. C'est alors la vitesse de rotation Vm du moteur électrique 10 qui est modifiée de manière à obtenir le débit Qp souhaité.

La valeur S2 correspond typiquement à la valeur de consigne pour laquelle le moteur électrique 10 atteint sa vitesse de rotation maximale Vmax. Ainsi, lorsque la consigne est supérieure à S2, la vitesse de rotation Vm du moteur électrique 10 demeure constante et égale à Vmax, et c'est la cylindrée de la pompe hydraulique 30 qui est modifiée de manière à obtenir le débit Qp souhaité. On indique par Cmax la valeur maximale de la cylindrée de la pompe hydraulique 30.

En variante ou en complément, le contrôleur 20 peut être configuré de manière à, lorsque la consigne est comprise entre S1 et S2, maximiser le rendement de la pompe hydraulique 30 et du moteur électrique 10, en conservant une vitesse de rotation Vm du moteur électrique 10 supérieure ou égale à la valeur seuil inférieure Vmin. Le contrôleur 20 peut alors par exemple faire varier la vitesse de rotation Vm du moteur électrique 10 et la cylindrée Cp de la pompe hydraulique 30 afin d'optimiser le rendement quelle que soit la consigne appliquée ou sur une ou plusieurs plages données de valeurs de consigne, mais en conservant une vitesse de rotation Vm du moteur électrique 10 supérieure ou égale à la valeur seuil inférieure Vmin.

En variante ou en complément, le contrôleur 20 peut être configuré de manière à maximiser le couple délivré par le moteur électrique 10, tout en conservant une vitesse de rotation Vm du moteur électrique 10 supérieure ou égale à la valeur seuil inférieure Vmin. Le contrôleur 20 peut alors par exemple faire varier la vitesse de rotation Vm du moteur électrique 10 et la cylindrée Cp de la pompe hydraulique 30 afin de maximiser le couple délivré par le moteur électrique 10 quelle que soit la consigne appliquée ou sur une ou plusieurs plages données de valeurs de consigne, mais en conservant une vitesse de rotation Vm du moteur électrique 10 supérieure ou égale à la valeur seuil inférieure Vmin.

Le contrôleur 20 peut être configuré de manière à alterner entre différents modes de pilotage en fonction des conditions d'utilisation, et ainsi à prioriser un paramètre donné.

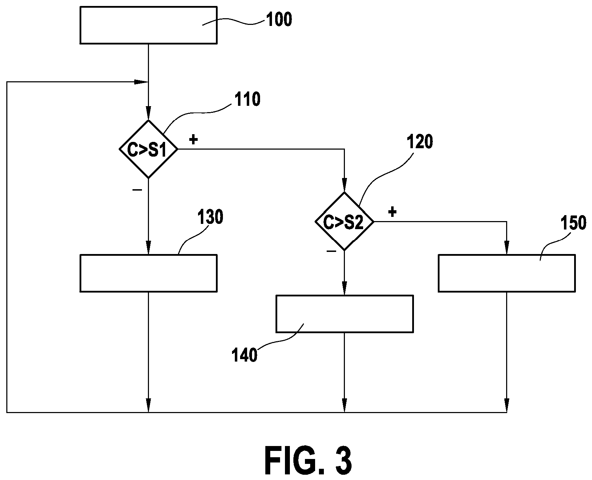

La présente invention concerne également un procédé de pilotage d'un système d'entrainement pour un essieu de véhicule. On décrit ci-après un exemple de réalisation d'un tel procédé de pilotage en référence à la figure 3.

Le système d'entrainement tel que considéré comprend une pompe hydraulique à cylindrée variable, un ou plusieurs moteurs hydrauliques alimentés par la pompe hydraulique via un circuit hydraulique en boucle fermée et adaptés pour entrainer en rotation un ou plusieurs essieux. Les moteurs hydrauliques sont typiquement des moteurs hydrauliques à cylindrée fixe. Le système d'entrainement comprend également un moteur électrique, adapté pour entrainer la pompe hydraulique, une source de puissance électrique, adaptée pour alimenter le moteur électrique ; ainsi qu'un organe de contrôle tel qu'un contrôleur pouvant être associé à des capteurs et/ou des unités de mémoire ou de stockage d'information.

On représente schématiquement sur la figure 3 un procédé, qui comprend une première étape 100 d'application d'une consigne, qui résulte typiquement d'une action de l'utilisateur, et qui va ainsi par exemple commander la mise en service de l'assistance hydraulique.

La consigne est typiquement une consigne de vitesse d'entrainement, qui se traduit par une consigne de débit délivré par la pompe hydraulique 30, ou une consigne de vitesse de rotation pour l'organe entrainé par le système.

On détermine ensuite le mode de fonctionnement. Cela se traduit sur la figure 3 par deux étapes de comparaison 110 et 120, dans lesquelles on détermine successivement si la consigne est supérieure ou non à un premier seuil S1, et si elle est supérieure ou non à un second seuil S2.

En fonction de la détermination réalisée, on va ensuite appliquer le mode de pilotage adapté comme déjà décrit notamment en référence aux figures 1 et 2.

Ainsi, dans l'exemple illustré, l'étape 130 correspond typiquement au mode de pilotage dans lequel la consigne est comprise entre 0 et S1, et dans lequel on assure en priorité que la vitesse de rotation Vm du moteur électrique 10 est supérieure ou égale à la valeur seuil inférieure Vmin, ou typiquement en conservant une vitesse de rotation Vm du moteur électrique 10 constante et égale à la valeur seuil inférieure Vmin. La cylindrée Cp de la pompe hydraulique 30 est ensuite déterminée de manière à réaliser la consigne.

L'étape 140 correspond typiquement au mode de pilotage dans lequel la consigne est comprise entre S1 et S2, et dans lequel la cylindrée Cp de la pompe hydraulique 30 est maintenue constante, égale à une valeur C1. C'est alors la vitesse de rotation Vm du moteur électrique 10 qui est modifiée de manière à obtenir le débit Qp souhaité.

L'étape 140 correspond typiquement au mode de pilotage dans lequel la consigne est supérieure à S2, et dans lequel la vitesse de rotation Vm du moteur électrique 10 demeure constante et égale à Vmax, et c'est la cylindrée de la pompe hydraulique 30 qui est modifiée de manière à obtenir le débit Qp souhaité.

Le procédé adapte ensuite le mode de pilotage en fonction de l'évolution de la consigne, via une boucle sur les étapes de comparaison 110.

Comme indiqué précédemment, le pilotage peut être réalisé de manière à maximiser le rendement total de la pompe hydraulique 30 et du moteur électrique 10, en conservant une vitesse de rotation Vm du moteur électrique 10 supérieure ou égale à la valeur seuil inférieure Vmin. On peut alors par exemple faire varier la vitesse de rotation Vm du moteur électrique 10 et la cylindrée Cp de la pompe hydraulique 30 afin d'optimiser le rendement total quelle que soit la consigne appliquée ou sur une ou plusieurs plages données de valeurs de consigne, mais en conservant une vitesse de rotation Vm du moteur électrique 10 supérieure ou égale à la valeur seuil inférieure Vmin. Par exemple, en faisant référence aux caractéristiques des composants pompe et moteur électriques mémorisées, pour une consigne de débit souhaitée, le procédé détermine le couple vitesse du moteur électrique - cylindrée de la pompe le plus avantageux pour un bon rendement, dans un domaine d'utilisation où la vitesse de rotation Vm du moteur électrique 10 est toujours supérieure à la valeur seuil inférieure Vmin. Le procédé peut tenir compte de la charge du moteur électrique. Par exemple si le couple demandé au moteur électrique est trop important, le procédé permet de sélectionner une plus grande vitesse de rotation Vm du moteur et une plus petite cylindrée Cp de la pompe hydraulique 30 pour obtenir un rendement global plus avantageux.

En variante ou en complément, on peut réaliser le pilotage de manière à maximiser le couple délivré par le moteur électrique 10, tout en conservant une vitesse de rotation Vm du moteur électrique 10 supérieure ou égale à la valeur seuil inférieure Vmin. On peut alors par exemple faire varier la vitesse de rotation Vm du moteur électrique 10 et la cylindrée Cp de la pompe hydraulique 30 afin de maximiser le couple délivré par le moteur électrique 10 quelle que soit la consigne appliquée ou sur une ou plusieurs plages données de valeurs de consigne, mais en conservant une vitesse de rotation Vm du moteur électrique 10 supérieure ou égale à la valeur seuil inférieure Vmin.

Le système tel que proposé et le procédé de pilotage associé réalisent ainsi un pilotage non linéaire de la vitesse de rotation du moteur électrique et de la cylindrée de la pompe hydraulique sur la plage de fonctionnement.

Le système tel que proposé peut également permettre d'utiliser différents autres couples de vitesse de moteur électrique 10 et de cylindrée de pompe hydraulique 30, dans la plage de Vmin a Vmax et de C1 à Cmax, par exemple pour éviter un mode de bruit, ou utiliser les composants en privilégiant l'économie ou la puissance. Ces lois de pilotage peuvent être non linéaires en fonction de la vitesse de roues.

L'invention telle que proposée définit ainsi un pilotage permettant d'optimiser le fonctionnement du moteur électrique et de la pompe hydraulique tout en préservant le moteur électrique contre une éventuelle surchauffe.

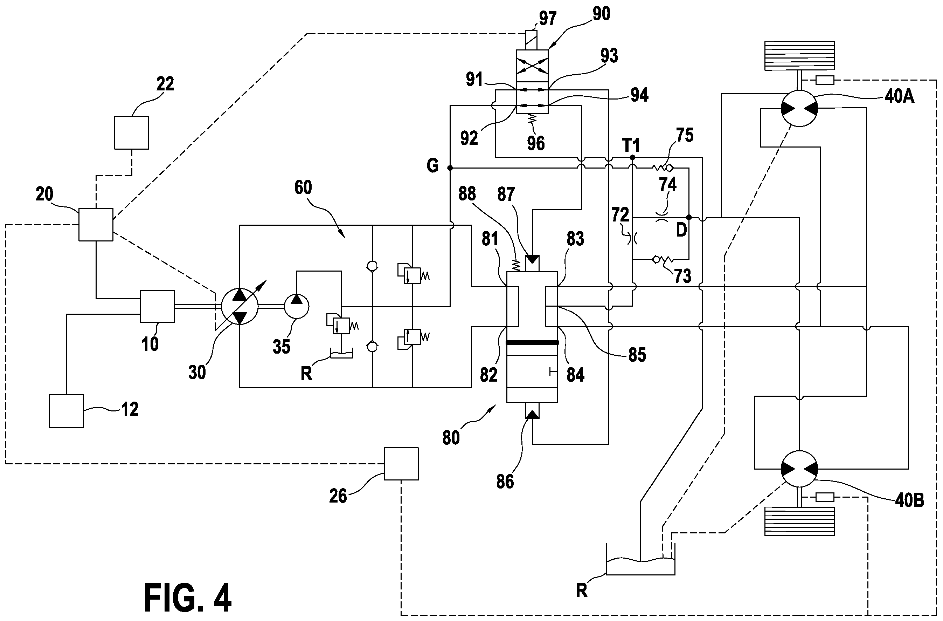

La figure 4 présente un exemple particulier de réalisation d'un système de transmission électrohydraulique, pouvant être une transmission principale ou d'assistance d'un véhicule ou d'un engin, notamment une assistance pouvant être sélectivement engagée ou désengagée.

Pour les assistances pouvant être sélectivement engagées, les moteurs hydrauliques 40 sont typiquement d'un type qui peut se désengager des roues, en particulier du type radial multilobe a came pouvant se désengager par rétractation des pistons dans le bloc, quand il n'y a plus de pression sur les orifices d'admission et de refoulement des moteurs. de tels moteurs peuvent comporter des ressorts de maintien des pistons en position rétractée. Une pression de carter peut aider à la rentrée ou au maintien des pistons en position rétractée. La rétractation des pistons libère les pistons de la came, ce qui désactive le moteur et permet de le faire tourner sans couple, ce qui libère l'arbre entrainé. En rétablissant une pression sur les orifices d'admission et de refoulement, les pistons sortent de leur logement et s'engagent sur la came multilobe, ce qui lie le moteur à l'axe entrainé. En position désengagée ces moteurs ne créent pas de couple de trainée sensible. Ces moteurs peuvent être engagés à une faible de pression, ce qui engage les pistons sur la came, et s'ils sont en equipression a leurs orifices d'admission et de refoulement peuvent tourner sans couple sensible tout en étant engagés, ce qui crée une mode de fonctionnement en roue libre, mais présentant une certain couple de trainée.

On retrouve sur cette figure les éléments déjà décrits précédemment en référence à la figure 1, ainsi que des éléments additionnels que l'on décrit ci-après.

Le circuit hydraulique reliant la pompe hydraulique 30 aux moteurs hydrauliques 40A et 40B comprend ici un circuit de gavage 60, alimenté par une pompe de gavage 35 qui est ici couplée en rotation à la pompe hydraulique 30. On comprend que la pompe de gavage 35 peut également être entrainée en rotation indépendamment de la pompe hydraulique 30. Le circuit de gavage 60 permet également d'obtenir une pression de pilotage pour des pilotages hydrauliques.

Le circuit de gavage 60 présente une structure connue ; il permet de réaliser un gavage du circuit hydraulique, ou de déverser un excédent de fluide dans un réservoir R.

Le circuit hydraulique présente une valve de pilotage 80, interposée entre la pompe hydraulique 30 et les moteurs hydrauliques 40A et 40B. Comme précédemment, on comprend que ce mode de réalisation n'est pas limitatif, et peut être transposé pour un ou plusieurs moteurs hydrauliques montés par exemple en série ou en parallèle.

La valve d'engagement 80 est une valve du type 5/2, qui présente ainsi 5 orifices et deux positions.

La valve d'engagement 80 présente :
- un premier orifice 81 relié à un premier orifice de la pompe hydraulique 30,
- un deuxième orifice 82 relié à un second orifice de la pompe hydraulique 30,
- un troisième orifice 83 relié à un premier orifice des moteurs hydrauliques 40A et 40B,
- un quatrième orifice 84 relié à un second orifice des moteurs hydrauliques 40A et 40B, et
- un cinquième orifice 85.

Le cinquième orifice 85 est relié à un réservoir R via une restriction 72, aux carters des moteurs hydrauliques 40A et 40B via une soupape tarée 73 et via la restriction 72 et une restriction 74 disposées successivement. Les carters des moteurs hydrauliques 40A et 40B sont reliés au circuit de gavage 60 via une soupape tarée 75, présentant typiquement un tarage de l'ordre de 0,3 bar, permettant une circulation de fluide vers le circuit de gavage 60.

Dans une première configuration, le premier orifice 81 est relié au deuxième orifice 82, tandis que le troisième orifice 83, le quatrième orifice 84 et le cinquième orifice 85 sont reliés entre eux. Un moyen de rappel 88 tel qu'un ressort permet de maintenir la valve d'engagement 80 par défaut dans sa première configuration.

Dans une seconde configuration, le premier orifice 81 est relié au troisième orifice 83, le deuxième orifice 82 est relié au quatrième orifice 84, et le cinquième orifice 85 est obturé.

Ainsi, dans sa première configuration, la valve d'engagement 80 relie d'une part l'aspiration et le refoulement de la pompe hydraulique 30, et d'autre part elle relie l'aspiration et le refoulement des moteurs hydrauliques 40A et 40B. Elle réalise ainsi une fonction de bipass communément désignée par le terme en langue anglaise de « bypass » de la pompe hydraulique 30 et un « bypass » des moteurs hydraulique 40A et 40B.

Dans sa seconde configuration, la valve d'engagement 80 relie le refoulement de la pompe hydraulique 30 sur l'aspiration des moteurs hydrauliques 40A et 40B, et le refoulement des moteurs hydrauliques 40A et 40B sur l'aspiration de la pompe hydraulique 30 pour un sens de rotation donné. Les désignations d'aspiration et de refoulement s'inversent dans le sens inverse de roulage, donc de débit.

Le pilotage de la valve d'engagement 80 est réalisé au moyen de deux commandes hydrauliques 86 et 87 en opposition.

La valve d'engagement 80 est actionnée par une valve de commande 90.

La valve de commande 90 est une valve du type 4/2, qui présente 4 orifices et deux configurations.

La valve de commande 90 comprend :
- un premier orifice 91 relié au cinquième orifice 85 de la valve d'engagement 80 via la restriction 72,
- un deuxième orifice 92 relié à la pompe de gavage 35 et à la soupape tarée 75,
- un troisième orifice 93 relié à la commande hydraulique 86,
- un quatrième orifice 94 relié à la commande hydraulique 87.

La valve de commande 90 présente une première configuration dans laquelle le premier orifice 91 est relié au troisième orifice 93 et le deuxième orifice 92 est relié au quatrième orifice 94, et une seconde configuration dans laquelle le premier orifice 91 est relié au quatrième orifice 94 et le deuxième orifice 92 est relié au troisième orifice 93.

La valve de commande 90 est pilotée par un actionneur 97, ici représenté comme étant un actionneur électrique, auquel s'oppose un moyen de rappel élastique 96, typiquement un ressort.

La valve de commande 90 est par défaut dans sa première configuration, ce qui vient ainsi actionner la commande hydraulique 87 et positionner la valve d'engagement 80 dans sa première configuration, c'est-à-dire une configuration dans laquelle les moteurs hydrauliques 40A et 40B ne sont pas alimentés par la pompe hydraulique 30.

L'actionnement de la commande 97 vient basculer la valve d'engagement 80 dans sa seconde configuration. Cela vient ainsi actionner la commande hydraulique 86, et positionne la valve d'engagement 80 dans sa seconde configuration, et relie ainsi les moteurs hydrauliques 40A et 40B à la pompe hydraulique 30.

La présente invention propose un pilotage amélioré pour l'engagement ou le désengagement de l'entrainement des organes de déplacement par le système tel que décrit, que l'on présente ci-après.

On considère une situation initiale dans laquelle l'ensemble du système est à l'arrêt. Le moteur électrique 10 est à l'arrêt, la pression est nulle dans le circuit hydraulique, la valve de commande 90 et la valve d'engagement sont chacune dans leur première configuration.

On met en service le moteur électrique 10. Comme déjà détaillé précédemment, la mise en service du moteur électrique 10 est réalisée de manière à assurer une vitesse de rotation supérieure à la valeur seuil inférieure Vmin.

La mise en service du moteur électrique 10 entraine en rotation la pompe hydraulique 30, dont la cylindrée est nulle dans le cas où il s'agit d'une pompe hydraulique à cylindrée variable, et la pompe de gavage 35, de manière à établir la pression de gavage dans le circuit hydraulique. On réalise typiquement une temporisation de manière à permettre l'établissement de la pression de gavage dans le circuit hydraulique du fait de la mise en service de la pompe de gavage 35.

On comprend que dans le cas où la pompe de gavage 35 est entrainée par un élément distinct, ou indépendamment de la pompe hydraulique 30, la pompe de gavage 35 est alors engagée préalablement à l'engagement ou la mise en cylindrée de la pompe hydraulique 30. Par exemple, la pompe de gavage 35 peut être actionnée par un moteur électrique séparé, ce qui constitue un groupe électro-pompe indépendant. Ainsi, dans le cas où la pompe de gavage 35 est entrainée par un autre élément, cette dernière est alors typiquement mise en service dans un premier temps, avant la mise en service du moteur électrique 10. Ainsi, les mises en service du moteur électrique 10 et de la pompe hydraulique 30 d'une part, et de la pompe de gavage 35 d'autre part peuvent être simultanées ou séquentielles, selon la configuration du système.

La mise en service de la pompe de gavage 35 réalise l'établissement d'une pression dans la boucle hydraulique du côté de la pompe hydraulique 30 via des clapets anti-retour de gavage sur les deux lignes hydrauliques, et réalise la pression de pilotage, par exemple pour le contrôle de cylindrée de pompe hydraulique 30, et pour le pilotage de la valve d'engagement 80 à travers la valve de commande 90.

On ajuste ensuite la cylindrée de la pompe hydraulique 30 et/ou la vitesse de rotation du moteur électrique 10 pour fournir un débit correspondant à une consigne appliquée aux moteurs hydrauliques 40. Cette consigne correspond typiquement au débit qu'il faudrait fournir pour que le système recopie la vitesse du véhicule qui est entrainé par sa transmission principale, et donc n'assure aucun couple moteur sur les roues.

La pompe hydraulique 30 et les moteurs hydrauliques 40A et 40B étant alors en situation de bypass, la pression dans le circuit est égale ou sensiblement égale à la pression de gavage, soit typiquement entre 5 et 20 bar.

On actionne ensuite la commande 97 pour basculer la valve de commande 90 dans sa seconde configuration, ce qui vient basculer la valve d'engagement 80 dans sa seconde configuration, de sorte que les moteurs hydrauliques 40 sont alimentés par la pompe hydraulique 30, ce qui réalise une mise en service des moteurs hydrauliques 40, et le cas échéant une sortie des pistons du moteur hydraulique 40 de leurs logements dans le cas d'un moteur hydraulique dont les pistons peuvent être rétractés dans leurs logements respectifs pour obtenir une configuration de roue libre, par opposition à une configuration engagée dans laquelle les pistons sont au contact d'une came multilobes ou d'un plateau. L'excédent de pression dans le carter des moteurs hydrauliques 40A et 40B est alors purgé via la restriction 74 et/ou la soupape tarée 75, cette dernière permettant de réinjecter la pression des carters dans le circuit de gavage 60. Les moteurs hydrauliques 40A et 40B étant engagés, et le débit fourni étant sensiblement égal à la vitesse de déplacement du véhicule, le circuit hydraulique ne délivre pas de couple et d'effort de traction sensible. La pression s'établit typiquement vers 80 bar, ce qui définit une situation ou l'assistance est engagée mais en situation d'attente. La consigne peut être donnée pour une pression plus basse, par exemple 40 bar, en situation de décélération ou de freinage du véhicule. Ce contrôle peut être affiné par un ajustement utilisant les données d'un capteur de pression. Ensuite, lorsqu'il est fait appel à l'assistance, une consigne légèrement supérieure à la vitesse d'avancement du véhicule, ou un contrôle en pression vers des pressions plus importantes permet de fournir un effort de traction sensible, ce qui met l'assistance en mode de traction effectif. La pression peut monter typiquement jusqu'à 400 bar. En fonction de la consigne appliquée, on pilote ensuite la cylindrée de la pompe hydraulique 30 et la vitesse de rotation du moteur électrique 10 par exemple comme décrit précédemment notamment en référence aux figures 2 et 3, pour s'adapter au roulage du véhicule.

On comprend que dans le cas où la pompe de gavage 35 est entrainée par un élément distinct, ou indépendamment de la pompe hydraulique 30, la pompe de gavage 35 est alors engagée préalablement à l'engagement ou la mise en cylindrée de la pompe hydraulique 30.

Dans le cas d'une assistance hydraulique sur un essieu secondaire d'un véhicule présentant un essieu primaire entrainé en rotation par un système d'entrainement principal, la consigne appliquée au système vise typiquement à synchroniser la vitesse de rotation de l'essieu secondaire à celle de l'essieu primaire. La vitesse de rotation du moteur électrique 10 et la cylindrée de la pompe hydraulique 30 sont alors typiquement pilotées de manière à réaliser cette consigne, tout en conservant une vitesse de rotation du moteur électrique 10 supérieure à la valeur seuil inférieure Vmin comme décrit précédemment.

On décrit à présent une séquence pour le désengagement du système.

On considère une situation initiale dans laquelle le système est engagé, et les organes de déplacement sont entrainés par les moteurs hydrauliques 40A et 40B, étant entendu que la vitesse peut être nulle.

Dans un premier temps, on pilote la cylindrée de la pompe hydraulique et/ou la vitesse de rotation du moteur électrique de manière à abaisser la pression dans le circuit hydraulique pour atteindre une pression de repos. Cette position de repos ou d'attente correspond à un mode de roulage ou les moteurs hydrauliques sont engagés, mais ne fournissent aucun couple. La pression dans le circuit est très basse, typiquement 80 bar.

Ensuite, on désengage la commande 97 de la valve de commande 90. La valve de commande 90 est ainsi ramenée dans sa première configuration, ce qui va également ramener la valve d'engagement 80 dans sa première configuration.

La valve d'engagement 80 dans sa première configuration isole les moteurs hydrauliques 40 de la pompe hydraulique 30. Cela va ainsi provoquer une chute de pression dans le circuit, la pression s'établissant au niveau de la pression de gavage, et le cas échéant cela va produire un effet de rétractation des pistons dans leurs logements. En effet, lorsque la valve d'engagement 80 bascule dans sa première configuration, les moteurs hydrauliques 40 sont entrainés en rotation par les organes de déplacement, typiquement les roues ou les essieux, mais ne sont plus alimentés en pression. Cela entraine alors une montée en pression au refoulement des moteurs hydrauliques 40. Le fluide ainsi refoulé passe par la valve d'engagement 80, et en ressort par le cinquième orifice 85 avant d'être déversé dans le réservoir R via la restriction 72. Du fait de la présence de la restriction 72, une partie du débit va passer par la soupape tarée 73, qui présente typiquement un tarage de l'ordre de 0,3 bar. La soupape tarée 73 étant reliée aux carters des moteurs hydrauliques 40, le débit qui passe par cette soupape tarée 73 va ainsi permettre d'amener l'huile nécessaire dans les carters des moteurs hydrauliques 40 en quantité sensiblement égale de celle qui sort des lignes d'admission et de refoulement des moteurs hydrauliques 40, et ainsi de permettre la rétractation des pistons des moteurs hydrauliques 40 dans leurs logements.

Les moteurs hydrauliques 40A et 40B sont par exemple munis d'éléments de rappel tels que des ressorts, qui tendent à positionner les pistons dans leur configuration rétractée. Ainsi, en l'absence d'une pression appliquée aux orifices d'admission et de refoulement des moteurs hydrauliques 40 qui va faire sortir les pistons de leurs logements, ces derniers sont rétractés, et les moteurs hydrauliques ont une cylindrée nulle.

On peut ici par exemple exécuter une temporisation afin d'assurer le retrait des pistons.

Dans le cas où la pompe hydraulique 30 est une pompe hydraulique à cylindrée variable, on pilote la cylindrée de la pompe hydraulique 30 pour l'amener à une cylindrée nulle. Le moteur électrique 10 est maintenu à une vitesse de rotation supérieure à la valeur seuil inférieure Vmin.

On arrête ensuite le moteur électrique, ce qui entraine un arrêt de la pompe hydraulique 30, puis le cas échéant on arrête le système de gavage lorsque la pompe de gavage 35 est entrainée par un autre élément.

Le système et le procédé tels que présentés présente ainsi un fonctionnement qui ne nécessite pas d'entrainer une pompe lorsque le système est désengagé. Il permet également d'assurer une préservation des différents composants, et une synchronisation de la vitesse de rotation dans le cas d'une transmission d'assistance.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

1. Procédé de mise en service d'un système d'entrainement secondaire pour un organe de déplacement de véhicule, le véhicule comprenant un système d'entrainement primaire, ledit système d'entrainement secondaire comprenant
- une pompe hydraulique (30) à cylindrée variable présentant un refoulement et une admission,
- un moteur hydraulique (40) présentant un refoulement et une admission, adapté pour entrainer en rotation ledit organe de déplacement et pouvant être sélectivement engagé ou désengagé dudit organe de déplacement, le moteur hydraulique (40) étant alimenté par la pompe hydraulique (30) via un circuit hydraulique en boucle fermée comprenant une pompe de gavage (35) adaptée pour réaliser un gavage du circuit hydraulique, le circuit hydraulique comprenant une valve d'engagement (80) adaptée pour sélectivement relier le moteur hydraulique (40) à la pompe hydraulique (30) ou isoler le moteur hydraulique (40) par rapport à la pompe hydraulique (30) et relier le refoulement de la pompe hydraulique (30) à son admission, et relier le refoulement du moteur hydraulique (40) à son admission,
- un moteur électrique (10), adapté pour entrainer la pompe hydraulique,
- une source de puissance électrique (12), adaptée pour alimenter le moteur électrique (10),
ledit procédé de mise en service comprenant les étapes suivantes, en considérant une configuration à l'arrêt du système d'entrainement, dans laquelle le moteur électrique (10), la pompe hydraulique (30) et la pompe de gavage (35) sont à l'arrêt, le moteur hydraulique (40) est désengagé, et la valve d'engagement (80) isole le moteur hydraulique (40) par rapport à la pompe hydraulique (30), relie le refoulement de la pompe hydraulique (30) à son admission, et relie le refoulement du moteur hydraulique (40) à son admission:
- mise en service de la pompe de gavage (35),
- mise en route du moteur électrique, de manière à entrainer en rotation la pompe hydraulique,
- ajustement de la cylindrée de la pompe hydraulique (30) et/ou de la vitesse de rotation du moteur électrique (10) pour fournir un débit correspondant à une consigne appliquée au moteur hydraulique (40),
- pilotage de la valve d'engagement (80) pour réaliser la mise en service du moteur hydraulique (40).

2. Procédé selon la revendication 1, dans lequel la valve d'engagement (80) présente trois orifices reliés au moteur hydraulique (40), et est adaptée pour relier l'admission et le refoulement du moteur hydraulique (40) à un carter du moteur hydraulique (40) et à un circuit de gavage (60) du circuit hydraulique, le moteur hydraulique (40) étant du type a désengagement par la rétractation de pistons dans un bloc cylindre.

3. Procédé selon la revendication 2, dans lequel le moteur hydraulique (40) est muni de ressorts de rappels tendant à positionner les pistons dans une position rétractée dans le bloc cylindres.

4. Procédé selon l'une des revendications 1 à 3, dans lequel la consigne appliquée lors de l'ajustement de la cylindrée correspond à une vitesse d'avancement du véhicule de sorte que le moteur hydraulique (40) ne fournisse pas de couple.

5. Procédé selon l'une des revendications 1 à 4, dans lequel suite au pilotage de la valve d'engagement, on applique une consigne au système de sorte que le moteur hydraulique (40) fournisse un couple de traction non nul.

6. Procédé selon l'une des revendications 1 à 5, dans lequel la pompe de gavage est entrainée en rotation par le moteur électrique, et
dans lequel la mise en route du moteur électrique est réalisée de manière à mettre en service la pompe de gavage.

7. Procédé selon l'une des revendications 1 à 5, dans lequel la pompe de gavage (35) est un groupe électro-pompe indépendant du moteur électrique (10).

8. Procédé selon l'une des revendications précédentes, dans lequel la cylindrée de la pompe hydraulique (30) et la vitesse de rotation du moteur électrique (10) sont pilotées de manière à réaliser une consigne tout en conservant une vitesse de rotation du moteur électrique (10) supérieure à une valeur seuil inférieure (Vmin).

9. Procédé selon la revendication 8, dans lequel on pilote la cylindrée de la pompe hydraulique (30) et la vitesse de rotation du moteur électrique (10) de manière à réaliser la consigne en maximisant le rendement total de la pompe hydraulique (30) et du moteur électrique (10) tout en conservant une vitesse de rotation du moteur électrique (10) supérieure à la valeur seuil inférieure (Vmin).

10. Procédé de mise en service selon l'une des revendications 1 à 9, comprenant en outre les étapes suivantes pour le désengagement du système d'entrainement, en considérant une configuration engagée du système d'entrainement, dans laquelle le moteur électrique (10) est en rotation, la pompe hydraulique (30) et la pompe de gavage (35) délivrent un débit, et le moteur hydraulique (40) est engagé et entraine en rotation l'organe de déplacement:
- pilotage de la cylindrée de la pompe hydraulique (30) et/ou de la vitesse de rotation du moteur électrique (10) de manière à abaisser la pression dans le circuit hydraulique pour atteindre une pression de repos,
- pilotage de la valve d'engagement (80) de manière à isoler le moteur hydraulique (40) de la pompe hydraulique (30),
- mise à cylindrée nulle de la pompe hydraulique (30) et arrêt du moteur électrique (10),
- arrêt de la pompe de gavage (35).

11. Procédé selon la revendication 10, dans lequel la cylindrée de la pompe hydraulique (30) et la vitesse de rotation du moteur électrique (10) sont pilotées de manière conserver une vitesse de rotation du moteur électrique (10) supérieure à une valeur seuil inférieure (Vmin) jusqu'à l'étape d'arrêt du moteur électrique (10).

12. Procédé selon l'une des revendications 10 ou 11, dans lequel la pression de repos est déterminée de sorte que le moteur hydraulique (40) applique un couple nul.

## Patentansprüche

1. Startverfahren eines sekundären Antriebssystems für ein Verschiebungsorgan eines Fahrzeugs, wobei das Fahrzeug ein primäres Antriebssystem umfasst, wobei das sekundäre Antriebssystem Folgendes umfasst:
- eine hydraulische Pumpe (30) mit variablem Hubraum, die eine Verdrängung und eine Aufnahme aufweist,
- einen hydraulischen Motor (40), der eine Verdrängung und eine Aufnahme aufweist, der ausgelegt ist, um das Verschiebungsorgan in Drehung zu versetzen und selektiv in das Verschiebungsorgan eingegriffen oder davon gelöst werden zu können, wobei der hydraulische Motor (40) von der hydraulischen Pumpe (30) über einen hydraulischen Kreislauf mit geschlossener Schleife versorgt wird, umfassend eine Zufuhrpumpe (35), die ausgelegt ist, um eine Zufuhr des hydraulischen Kreislaufs durchzuführen, wobei der hydraulische Kreislauf ein Eingriffsventil (80) umfasst, das ausgelegt ist, um selektiv den hydraulischen Motor (40) mit der hydraulischen Pumpe (30) zu verbinden oder den hydraulischen Motor (40) mit Bezug auf die hydraulische Pumpe (30) zu isolieren und die Verdrängung der hydraulischen Pumpe (30) mit ihrer Aufnahme zu verbinden und die Verdrängung des hydraulischen Motors (40) mit seiner Aufnahme zu verbinden,
- einen elektrischen Motor (10), der ausgelegt ist, um die hydraulische Pumpe anzutreiben,
- eine elektrische Stromquelle (12), die ausgelegt ist, um den elektrischen Motor (10) zu versorgen, wobei das Startverfahren die folgenden Schritte umfasst, unter Berücksichtigung einer Konfiguration des Stopps des Antriebssystems, wobei der elektrische Motor (10) und die hydraulische Pumpe (30) und die Zufuhrpumpe (35) gestoppt sind, der hydraulische Motor (40) gelöst ist und das Eingriffsventil (80) den hydraulischen Motor (40) mit Bezug auf die hydraulische Pumpe (30) isoliert, die Verdrängung der hydraulischen Pumpe (30) mit ihrer Aufnahme verbindet und die Verdrängung des hydraulischen Motors (40) mit seiner Aufnahme verbindet:
- Starten der Zufuhrpumpe (35),
- Einschalten des elektrischen Motors, um die hydraulische Pumpe in Drehung zu versetzen,
- Einstellen des Hubraums der hydraulischen Pumpe (30) und/oder der Drehgeschwindigkeit des elektrischen Motors (10), um einen Durchsatz zu liefern, der einem auf den hydraulischen Motor (40) angewendeten Sollwert (40) entspricht,
- Steuern des Eingriffsventils (80), um den Start des hydraulischen Motors (40) durchzuführen.

2. Verfahren nach Anspruch 1, wobei das Eingriffsventil (80) drei Öffnungen aufweist, die mit dem hydraulischen Motor (40) verbunden sind, und ausgelegt ist, um die Aufnahme und die Verdrängung des hydraulischen Motors (40) mit einem Gehäuse des hydraulischen Motors (40) und mit einem Zufuhrkreislauf (60) des hydraulischen Kreislaufs zu verbinden, wobei der hydraulische Motor (40) vom Typ Lösen durch Rückzug von Kolben in einem Zylinderblock ist.

3. Verfahren nach Anspruch 2, wobei der hydraulische Motor (40) mit Rückholfedern ausgestattet ist, die dazu neigen, die Kolben in eine zurückgezogene Position in dem Zylinderblock zu positionieren.

4. Verfahren nach einem der Ansprüche 1 bis 3, wobei der bei der Einstellung des Hubraums angewendete Sollwert einer Vorschubgeschwindigkeit des Fahrzeugs entspricht, so dass der hydraulische Motor (40) kein Drehmoment liefert.

5. Verfahren nach einem der Ansprüche 1 bis 4, wobei nach dem Steuern des Eingriffsventils ein Sollwert auf das System angewendet wird, so dass der hydraulische Motor (40) ein Antriebsdrehmoment von nicht null liefert.

6. Verfahren nach einem der Ansprüche 1 bis 5, wobei die Zufuhrpumpe durch den elektrischen Motor in Drehung versetzt wird, und wobei das Einschalten des elektrischen Motors derart durchgeführt wird, dass die Zufuhrpumpe gestartet wird.

7. Verfahren nach einem der Ansprüche 1 bis 5, wobei die Zufuhrpumpe (35) eine Elektropumpengruppe ist, die von dem elektrischen Motor (10) unabhängig ist.

8. Verfahren nach einem der vorhergehenden Ansprüche, wobei der Hubraum der hydraulischen Pumpe (30) und die Drehgeschwindigkeit des elektrischen Motors (10) derart gesteuert werden, dass ein Sollwert erreicht wird und gelichzeitig eine Drehgeschwindigkeit des elektrischen Motors (10) beibehalten wird, die grösser als ein kleinerer Schwellenwert (Vmin) ist.

9. Verfahren nach Anspruch 8, wobei der Hubraum der hydraulischen Pumpe (30) und die Drehgeschwindigkeit des elektrischen Motors (10) so gesteuert werden, dass der Sollwert erreicht wird, indem die gesamte Leistung der hydraulischen Pumpe (30) und des elektrischen Motors (10) maximiert wird und gelichzeitig eine Drehgeschwindigkeit des elektrischen Motors (10) beibehalten wird, die grösser als der kleinere Schwellenwert (Vmin) ist.

10. Verfahren des Startens nach einem der Ansprüche 1 bis 9, umfassend außerdem die folgenden Schritte für das Lösen des Antriebssystems unter Berücksichtigung einer eingegriffenen Konfiguration des Antriebsystems, wobei der elektrische Motor (10) in Drehung ist, die hydraulische Pumpe (30) und die Zufuhrpumpe (35) einen Durchsatz liefern und der hydraulische Motor (40) eingegriffen ist und das Verschiebungsorgan in Drehung versetzt:
- Steuern des Hubraums der hydraulischen Pumpe (30) und/oder der Drehgeschwindigkeit des elektrischen Motors (10), um den Druck in dem hydraulischen Kreislauf zu senken, um einen Ruhedruck zu erreichen,
- Steuern des Eingriffsventils (80), um den hydraulischen Motor (40) von der hydraulischen Pumpe (30) zu isolieren,
- Setzen der hydraulischen Pumpe (30) auf Hubraum null und Stoppen des elektrischen Motors (10),
- Stoppen der Zufuhrpumpe (35).

11. Verfahren nach Anspruch 10, wobei der Hubraum der hydraulischen Pumpe (30) und die Drehgeschwindigkeit des elektrischen Motors (10) derart gesteuert werden, dass sie eine Drehgeschwindigkeit des elektrischen Motors (10), die grösser als ein kleinerer Schwellenwert (Vmin) ist, bis zu dem Schritt des Stoppens des elektrischen Motors (10) beibehalten.

12. Verfahren nach einem der Ansprüche 10 oder 11, wobei der Ruhedruck derart bestimmt wird, dass der hydraulische Motor (40) ein Drehmoment von null anwendet.

## Claims

1. A process for start-up of a secondary propulsion system for a vehicle displacement component, the vehicle comprising a primary propulsion system, said secondary propulsion system comprising
- a variable displacement hydraulic pump (30) having a discharge and an admission,
- a hydraulic motor (40) having a discharge and an admission, adapted to drive said displacement component in rotation and which can be selectively engaged or disengaged from said displacement component, the hydraulic motor (40) being fed by the hydraulic pump (30) via a closed-loop hydraulic circuit comprising a feed pump (35) adapted to feed the hydraulic circuit, the hydraulic circuit comprising an engagement valve (80) adapted to selectively connect the hydraulic motor (40) to the hydraulic pump (30) or isolate the hydraulic motor (40) relative to the hydraulic pump (30) and connect the discharge of the hydraulic pump (30) to its admission, and connect the discharge of the hydraulic motor (40) to its admission,
- an electric motor (10), adapted to drive the hydraulic pump,
- a source of electric power (12), adapted to feed the electric motor (10), said process for start-up comprising the following steps, given a configuration when the propulsion system is at a standstill, in which the electric motor (10), the hydraulic pump (30) and the feed pump (30) are at a standstill, the hydraulic motor (40) is disengaged, and the engagement valve (80) isolates the hydraulic motor (40) from the hydraulic pump (30), connects the discharge of the hydraulic pump (30) its admission, and connects the discharge of the hydraulic motor (40) to its admission:
- start-up of the feed pump (35),
- starting up of the electric motor, so as to drive the hydraulic pump in rotation,
- adjustment of the displacement of the hydraulic pump (30) and/or of the rotational speed of the electric motor (10) to provide a flow rate corresponding to a setpoint applied to the hydraulic motor (40),
- control of the engagement valve (80) to execute start-up of the hydraulic motor (40).

2. The process according to claim 1, wherein the engagement valve (80) has three ports connected to the hydraulic motor (40), and is adapted to connect the admission and the discharge of the hydraulic motor (40) to a crankcase of the hydraulic motor (40) and to a feed circuit (60) of the hydraulic circuit, the hydraulic motor (40) being of disengagement type by the retractation of pistons in a cylinder block.

3. The process according to claim 2, wherein the hydraulic motor (40) is fitted with return springs tending to position the pistons in a retracted position in the cylinder blocks.

4. The process according to any one of claims 1 to 3, wherein the setpoint applied during adjustment of the displacement corresponds to a speed of advance of the vehicle such that the hydraulic motor (40) provides no torque.

5. The process according to any one of claims 1 to 4, wherein following control of the engagement valve, a setpoint is applied to the system such that the hydraulic motor (40) provides non-zero traction torque.

6. The process according to any one of claims 1 to 5, wherein the feed pump is driven in rotation by the electric motor, and wherein starting up of the electric motor is executed so as to put the feed pump into service.

7. The process according to any one of claims 1 to 5, wherein the feed pump (35) is an electro-pump group independent of the electric motor (10).

8. The process according to any one of the preceding claims, wherein the displacement of the hydraulic pump (30) and the rotational speed of the electric motor (10) are controlled so as to create a setpoint and maintain a rotational speed of the electric motor (10) greater than a lower threshold value (Vmin).

9. The process according to claim 8, wherein the displacement of the hydraulic pump (30) and the rotational speed of the electric motor (10) are controlled so as to produce the setpoint by maximising the total output of the hydraulic pump (30) and of the electric motor (10) while maintaining a rotational speed of the electric motor (10) greater than the lower threshold value (Vmin).

10. The process for start-up according to any one of claims 1 to 9, comprising also the following steps for disengagement of the propulsion system, given an engaged configuration of the propulsion system, in which the electric motor (10) is in rotation, the hydraulic pump (30) and the feed pump (35) deliver a flow rate, and the hydraulic motor (40) is engaged and drives the displacement component in rotation:
- control of the displacement of the hydraulic pump (30) and/or of the rotational speed of the electric motor (10) so as to lower the pressure in the hydraulic circuit to achieve a resting pressure,
- control of the engagement valve (80) so as to isolate the hydraulic motor (40) from the hydraulic pump (30),
- zero displacement of the hydraulic pump (30) and shutdown of the electric motor (10),
- shutdown of the feed pump (35).

11. The process according to claim 10, wherein the displacement of the hydraulic pump (30) and the rotational speed of the electric motor (10) are controlled so as to maintain a rotational speed of the electric motor (10) greater than a lower threshold value (Vmin) up to the shutdown step of the electric motor (10).

12. The process according to any one of claims 10 or 11, wherein the resting pressure is determined such that the hydraulic motor (40) applies zero torque.
